# EUROPÄISCHE PATENTSCHRIFT

(11) **EP 3 334 594 B1**
(45) Veröffentlichungstag und Bekanntmachung des Hinweises auf die Patenterteilung: **13.03.2019**
(21) Anmeldenummer: 16747475.8
(22) Anmeldetag: 27.07.2016
(51) Int. Cl.: B32B 5/24, A41D 31/00

(54) **VERFAHREN ZUR HERSTELLUNG EINES SCHWERENTFLAMMBAREN TEXTILMATERIALS FÜR SCHUTZBEKLEIDUNG, SCHWERENTFLAMMBARES TEXTILMATERIAL UND DARAUS HERGESTELLTE SCHUTZKLEIDUNG**
METHOD FOR MANUFACTURING A FLAME-RESISTANT TEXTILE MATERIAL FOR PROTECTIVE CLOTHING, FLAME-RESISTANT TEXTILE MATERIAL, AND PROTECTIVE CLOTHING MADE THEREOF
PROCÉDÉ DE PRODUCTION D'UNE MATIÈRE TEXTILE DIFFICILEMENT INFLAMMABLE POUR VÊTEMENT DE PROTECTION, MATIÈRE TEXTILE DIFFICILEMENT INFLAMMABLE ET VÊTEMENT DE PROTECTION RÉALISÉ À PARTIR DE CELLE-CI

(30) Priorität: 13.08.2015 DE 102015010524
(43) Veröffentlichungstag der Anmeldung: 20.06.2018
(73) Patentinhaber: Trans-Textil GmbH, 83395 Freilassing (DE)
(72) Erfinder: GSTETTNER, Alexander, 4661 Roitham (AT)
(74) Vertreter: Flach Bauer Stahl Patentanwälte Partnerschaft mbB
(86) Internationale Anmeldenummer: PCT/EP2016/067882
(87) Internationale Veröffentlichungsnummer: WO 2017/025328

(56) Entgegenhaltungen:
- EP-A1- 1 975 296
- WO-A2-2012/096921
- WO-A2-2012/167298
- US-A- 4 812 145

## Beschreibung

Die Erfindung betrifft ein Verfahren zur Herstellung eines Laminates für Schutzbekleidung zum Schutz vor Hitze und Flammen gemäß Anspruch 1, ein mittels eines derartigen Verfahrens hergestelltes schwerentflammbares Textilmaterial gemäß Anspruch 9 sowie eine zumindest überwiegend aus einem derartigen Textilmaterial bestehende schwerentflammbare Schutzbekleidung gemäß Anspruch 12.

Eine schwerentflammbare Schutzbekleidung wird insbesondere von Feuerwehrleuten benötigt, um sich vor Hitze und Flammen in gefährlichen Situationen und bei Löscheinsätzen zu schützen. Hierbei wird von der Bekleidung erwartet, dass diese bei direktem Kontakt mit Hitze und Flammen die Haut des Trägers schützt und somit das Risiko auf Brandverletzungen reduziert.

Eine vor Hitze und Flammen schützende Schutzbekleidung wird ferner beispielsweise auch von Polizei und Sicherheitspersonal, Militär, Motorsportfahrern und industriellen Arbeitern, z.B. in der Gas- und chemischen Industrie, sowie von Menschen benötigt, die in elektrischen Hoch- und Niederspannungsbereichen arbeiten und dem Risiko von elektrischen Störlichtbögen ausgesetzt sind.

Es ist bekannt, zum Schutz vor Hitze und Flammen einlagige Schutzbekleidung aus Leder oder sehr schweren Stoffen aus Baumwolle oder Wolle zu verwenden, die durch Imprägnierung mit speziellen Chemikalien schwerentflammbar gemacht werden. Diese Bekleidung bietet jedoch nur limitierten Schutz.

Weiterhin ist Schutzbekleidung aus schwerentflammbaren Chemiefasern bekannt, die aus natürlichen oder synthetischen Polymeren bestehen, beispielsweise Aramidfasern oder schwerentflammbare Viskosefasern.

Die mittlerweile durch Normen festgelegten hohen Anforderungen an die Schutzwirkung von Feuerwehreinsatzbekleidung können nur noch mit mehrlagigen speziellen Bekleidungsaufbauten erfüllt werden. Diese neuen, mehrlagigen Bekleidungsaufbauten bieten zwar eine hohe Schutzwirkung gegenüber Hitze und Flammen, verursachen beim Träger jedoch ein besonders hohes Maß an Hitzestress durch mangelnde Abfuhr der Körperwärme. Dieser Hitzestress kann zu einer enormen physiologischen Belastung bis zum Kollabieren oder sogar zum Tod der Träger führen. Ein weiterer Nachteil der bisher bekannten Schutzbekleidung ist deren hohes Gewicht und schlechter Tragekomfort.

Aus der WO 2012/096921 A2 ist ein Textilmaterial mit zonenabhängigem Feuchtigkeitstranport und dessen Herstellung bekannt, wobei das Textilmaterial eine erste Schicht enthält, welche sowohl lösliche als auch unlösliche Fasernkomponenten aufweist und wobei ein Teil der löslichen Fasern aufgelöst wird.

Aus der EP 1 975 296 A1 ist ein Textilmaterial mit Bereichen unterschiedlicher Dehnbarkeit und ein Verfahren zu dessen Herstellung bekannt, bei dem lösliche Fasern aus dem Textilmaterial entfernt werden.

US 4 812 145 A beschreibt ein Herstellverfahren für ein Batterietrennmaterial, bei dem nicht lösliche Fasern aus Polyvinylalkohol, lösliche Fasern aus Polyvinylalkohol und Zellulosefasern in einem Lösungsmittel gemischt werden, bis eine relativ einheitliche Mischung aus Zellulosefasern in den nichtlöslichen Fasern erreicht wird und die löslichen Fasern gelöst sind.

Die WO 2012/167298 A2 beschreibt ein für eine Schutzbekleidung verwendbares Textilmaterial und ein Verfahren zu dessen Herstellung, bei dem ein Polymer des Textilmaterials unter Vorhandensein eines anorganischen Gleitmittels in Aktivkohle umgewandelt wird.

Der Erfindung liegt daher die Aufgabe zugrunde, ein Verfahren zu schaffen, mit dem ein Laminat für Schutzbekleidung zum Schutz vor Hitze und Flammen hergestellt werden kann, das neben einer hohen Flammenbeständigkeit eine verringerte physiologische Belastung für den Träger der Schutzbekleidung, insbesondere weniger Hitzestress, verursacht und eine verbesserte Atmungsaktivität bei geringerem Gewicht aufweist. Weiterhin soll ein Textilmaterial sowie eine Schutzbekleidung, bestehend aus einem derartigen Textilmaterial, mit diesen Eigenschaften geschaffen werden.

Diese Aufgabe wird erfindungsgemäß durch ein Verfahren gemäß Anspruch 1, durch ein schwerentflammbares Textilmaterial gemäß Anspruch 9 und durch eine schwerentflammbare Schutzbekleidung gemäß Anspruch 12 gelöst. Vorteilhafte Ausführungsformen der Erfindung sind in den weiteren Ansprüchen beschrieben.

Beim erfindungsgemäßen Verfahren wird ein Laminat für Schutzbekleidung zum Schutz vor Hitze und Flammen hergestellt, das mindestens eine Textillage umfasst, die aus schwer entflammbaren Fasern aus synthetischen Polymeren und Zellulosefasern besteht, wobei die synthetischen Polymere aus der Gruppe von Para-aramid, Meta-aramid, aromatischen PES, PBI, Melaminharz, Novoloid, Modacryl, FR Polyamid, in Reinform oder einer Mischung davon ausgewählt sind, und wobei die Textillage einem Behandlungsschritt unterzogen wird, bei dem mindestens eine Faserkomponente zumindest teilweise aus der Textillage herausgelöst wird.

Mittels des erfindungsgemäßen Verfahrens kann ein Textilmaterial geschaffen werden, das Luftkammern aufweist, die zusätzliche Isolation bieten und somit den Schutz vor Hitze und Flammen aufrechterhalten, gleichzeitig aber das Gewicht des Textilmaterials signifikant reduzieren, Feuchtigkeit optimal transportieren und zusätzlich eine unbegrenzte Möglichkeit von Designoptionen bieten.

Die Vorteile des mittels des erfindungsgemäßen Verfahrens hergestellten Textilmaterials bzw. der aus einem derartigen Textilmaterial hergestellten Schutzbekleidung können folgendermaßen zusammengefasst werden:
- Hervorragender Schutz gegen Hitze und Flammen
- Reduktion von Bekleidungsgewicht
- Extreme Atmungsaktivität und Luftdurchlässigkeit
- Geringerer Hitzestress
- Ultimativer Tragekomfort
- Hohe Feuchtigkeitsaufnahme
- Schneller Feuchtigkeitstransport
- Schnelle Rücktrocknung, weniger Feuchtigkeit im Bekleidungssystem
- Weicher Griff, hohe textile Flexibilität
- Unlimitierte Musterungsmöglichkeiten
- Maßgeschneiderte Applikationen in Bekleidungsteilen möglich (Body Mapping)
- Direkte Verklebung der Nähte bei Laminaten möglich

Gemäß einer vorteilhaften Ausführungsform des erfindungsgemäßen Verfahrens wird mindestens eine Faserkomponente mittels Ätzdruck aus der Textillage herausgelöst. Vorzugsweise umfasst dabei die Textillage Zellulosefasern und synthetische Fasern, wobei auf die Textillage eine Ätzpaste aufgetragen wird, welche die Zellulosefasern ätzt, wenn die Ätzpaste bei Temperaturen von über 150°C thermisch aktiviert wird.

Alternativ oder zusätzlich kann die Textillage eine wasserlösliche Faserkomponente umfassen, wobei die Textillage einem Behandlungsschritt unterworfen wird, bei dem die wasserlösliche Faserkomponente zumindest teilweise aus der Textillage herausgewaschen wird.

Gemäß einer vorteilhaften Ausführungsform besteht die wasserlösliche Faserkomponente aus Polyvinylalkoholfasern, wobei das Herauswaschen der Polyvinylalkoholfasern mittels einer geringfügig sauren, wässrigen Lösung durchgeführt wird, die einen pH-Wert zwischen 4 und 5 hat.

Gemäß einer vorteilhaften Ausführungsform umfasst die Textillage sowohl eine erste Faserkomponente, welche mittels einer Ätzpaste aus der Textillage herauslösbar ist, als auch eine zweite, wasserlösliche Faserkomponente, die mittels einer wässrigen Lösung aus der Textillage herauswaschbar ist, wobei sowohl die erste Faserkomponente durch Ätzdruckbehandlung als auch die zweite, wasserlösliche Faserkomponente durch Auswaschbehandlung aus der Textillage herausgelöst werden.

Das Herauslösen der mit der Ätzpaste behandelten ersten Faserkomponente und der zweiten, wasserlöslichen Faserkomponente kann vorzugsweise gleichzeitig in einem Auswaschschritt erfolgen.

Alternativ hierzu ist es auch möglich, dass das Herauslösen der mit der Ätzpaste behandelten ersten Faserkomponente und der zweiten, wasserlöslichen Faserkomponente gleichzeitig während eines Färbeprozesses erfolgt.

Das mittels des erfindungsgemäßen Verfahrens hergestellte schwerentflammbare Textilmaterial umfasst vorzugsweise mindestens eine Textillage, die aus mindesten 10 bis 60 % Zellulosefasern, 10 bis 60 % wasserlöslichen Polyvinylalkoholfasern und 10 bis 60 % Fasern aus der Gruppe der schwerentflammbaren Chemiefasern aus synthetischen Polymeren, oder der Gruppe der Proteinfasern, oder einer Mischung von Fasern beider Gruppen besteht.

Sämtliche %-Angaben sind im Rahmen der vorliegenden Erfindung Gewichts-%, soweit nicht ausdrücklich anders angegeben.

Vorzugsweise wird der Textillage, bezogen auf das Gewicht vor dem Entfernen der Faser, ein Anteil von 1 bis 25 % Chemiefasern aus brennbaren, synthetischen Polymeren beigemischt. Mit derartigen beigemischten Polymeren können bestimmte Eigenschaften des Textilmaterials, beispielsweise das Abrasionsverhalten, gezielt beeinflusst bzw. verbessert werden.

Vorteilhafterweise werden für die Textillage Garne verwendet, die aus einer Intimmischung von lösbaren und unlösbaren Stapelfaserkomponenten bestehen.

Gemäß einer vorteilhaften Ausführungsform können für die Textillage Garne verwendet werden, die in Kette und Schuss aus einem Zwirn bestehen, wobei mindestens ein Einzelgarn aus einer lösbaren Faserkomponente und mindestens ein Einzelgarn aus einer unlösbaren Faserkomponente bestehen.

Vorteilhafterweise werden die Zellulosefasern durch ein Flammschutzmittel während oder nach der Faserproduktion schwerentflammbar gemacht.

Vorteilhafterweise sind die Zellulosefasern aus der Gruppe von Baumwolle, Hanf, Leinen, Ramie, Viskose, Rayon, Cupro, Acetat, Triacetat, Modal, Lyocell oder einer Mischung davon ausgewählt.

Erfindungsgemäß sind die schwerentflammbaren Chemiefasern aus synthetischen Polymeren aus der Gruppe von para-Aramid, meta-Aramid, aromatischen PES, PBI, Melaminharz, Novoloid, Modacryl, FR Polyamid, in Reinform oder einer Mischung davon ausgewählt.

Vorteilhafterweise sind die Proteinfasern aus der Gruppe von Wolle und Seide, in Reinform oder eine Mischung davon ausgewählt.

Vorteilhafterweise sind die verwendeten Garne Endlos-Filamente aus Seide, Zellulose und Chemiefasern aus synthetischen Polymeren, oder die Garne sind aus dem Endlos-Filament durch Schneidkonvertierung oder Stretch-Broken-Spinntechnologie hergestellt.

Vorteilhafterweise sind den Garnen Antistatikfasern beigemischt oder die Garne weisen mit Hilfe von Antistatikfilamenten webtechnische Gitterstrukturen auf, mit denen antistatische Eigenschaften erzielbar sind.

Vorteilhafterweise sind eine oder mehrere Faserkomponenten Spinndüsen-, Flocke-, Kammzug- im Garn oder gewebegefärbt.

Vorteilhafterweise wird die Textillage durch Weben, Stricken, Wirken oder Non-Woven-Technologie hergestellt.

Vorteilhafterweise wird die Textillage als Steppverbund mit einer oder mehreren Textillagen, als Zwischenisolationslage, als Laminat oder Bondierung in Verbindung mit einer oder mehreren Textillagen und als Träger für Beschichtungen verwendet.

Vorteilhafterweise umfasst das Textilmaterial mehrere Textillagen, wobei bei mindestens eine Textillage einer Faserkomponente mittels Ätzdruck herausgelöst und bei mindestens einer anderen Textillage eine wasserlösliche Faserkomponente herausgewaschen ist.

Die Erfindung wird nachfolgend anhand von Zeichnungen und Beispielen näher erläutert. Es zeigen:
- Fig. 1a:: eine schematische Darstellung eines mehrlagigen Textilmaterials gemäß der Erfindung,
- Fig. 1b:: das Textilmaterial von Fig. 1a im Querschnitt,
- Fig. 2a:: einen Querschnitt eines beim erfindungsgemäßen Textilmaterial verwendeten Garns mit drei unterschiedlichen Faserkomponenten vor Anwendung des erfindungsgemäßen Verfahrens,
- Fig. 2b:: das Garn von Fig. 2a nach Durchführung der erfindungsgemäßen Ätzdruck- und Auswaschbehandlung,
- Fig. 3a:: ein Gewebe mit unterschiedlichen Faserkomponenten vor Anwendung des erfindungsgemäßen Verfahrens,
- Fig. 3b:: das Gewebe von Fig. 3a nach Anwendung des erfindungsgemäßen Ätzdruck- und Auswaschverfahrens, und
- Fig. 4:: einen Querschnitt durch ein Dreilagenlaminat der Schutzbekleidung gemäß der Erfindung.

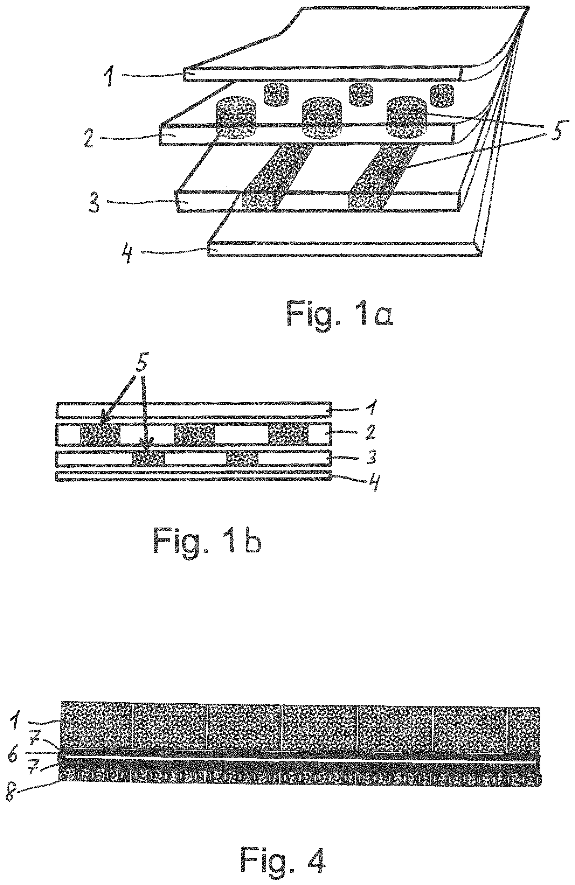

Die Figuren 1a, 1b zeigen ein schwerentflammbares Textilmaterial, das aus vier Lagen besteht und für schwerentflammbare Schutzbekleidung, beispielsweise für die Feuerwehr, verwendet werden kann.

Das Textilmaterial umfasst vier Textillagen, nämlich eine Außenlage 1, eine erste Isolationslage 2, eine zweite Isolationslage 3 und einen Futterstoff 4, der die innerste Textillage bildet.

Die beiden Isolationslagen 2, 3 weisen bei diesem Ausführungsbeispiel Luftkammern 5 auf, die dadurch gebildet werden, dass eine oder mehrere Faserkomponenten aus den fertigen Textillagen durch Anwendung einer der nachfolgend beschriebenen verschiedenen Verfahrensvarianten nachträglich aus der Textillage wieder herausgelöst worden ist (sind). Die Luftkammern 5 verbessern dabei die Isolationseigenschaften des Textilmaterials und damit den Schutz vor Hitze und Flammen, wobei jedoch gleichzeitig das Gewicht der fertigen Schutzbekleidung signifikant reduziert und Feuchtigkeit optimal transportiert werden kann, sowie zusätzlich eine unbegrenzte Möglichkeit von Designoptionen ermöglicht wird.

Die Form, Größe und Anordnung der Luftkammern 5, die in den Figuren 1a, 1b lediglich schematisch dargestellt sind, sowie Anzahl und Zusammensetzung der einzelnen Textillagen können dabei in weitem Umfang variieren. Wesentlich ist das Prinzip, dass aus einer oder mehreren fertigen Textillagen eine oder mehrere Faserkomponenten nachträglich teilweise oder vollständig entfernt werden, wodurch die Dichte in denjenigen Bereichen, in denen die Fasern entfernt wurden, entsprechend verringert wird.

Zur Herstellung des erfindungsgemäßen schwerentflammbaren Textilmaterials werden im Folgenden drei Verfahrensvarianten näher beschrieben.

### Verfahren 1 (Ätzdruckverfahren)

Beim Ätzdruckverfahren wird eine Ätzpaste in einem bestimmten Muster auf die Textillage aufgebracht und nach Trocknung thermisch bei erhöhten Temperaturen aktiviert, so dass bestimmte Faserkomponenten geätzt und aus der Textillage nachträglich wieder herausgelöst werden können.

Die Ätzpaste besteht zum Beispiel aus folgenden Bestandteilen:
- 170 Teile p-Toluolsulfonsäure (alternativ können auch andere Ätzkomponenten wie zum Beispiel Natriumhydrogensulfat/Natriumbisulfat, Methansulfonsäure oder ein Alkylnaphthalinsulfonsäuregemisch verwendet werden)
- 80 Teile Glyzerin
- 80 Teile Polyglykol 400
- 500 Teile einer 5%igen Kernmehlverdickung oder alternative Verdickungsmittel
- 170 Teile Wasser

Die Ätzpaste wird im vorbestimmten Muster auf ein Textil, bestehend aus zum Beispiel zellulosischen und synthetischen Fasern, insbesondere mittels Rotations-Schablonendruck aufgedruckt, im Anschluss wird die Ware im Spannrahmen bei 80°C getrocknet. In einer anschließenden Wärmebehandlung bei 190°C und 40 Sekunden Verweilzeit wird die Ätzpaste thermisch aktiviert. Anschließend wird zum Beispiel auf einer Breitwaschanlage gespült und der zerstörte Zellulosefaseranteil ausgewaschen, die Textillage geseift und mittels eines Spannrahmen oder einer der Textillage entsprechenden Trocknungsapparatur und Verfahren getrocknet.

### Verfahren 2 (Auswaschen von wasserlöslichen PVA-Fasern)

Bei diesem Verfahren wird die Textillage aus einer Mischung von wasserunlöslichen Fasern und wasserlöslichen Polyvinylalkoholfasern (zum Beispiel Kuralon K-II) hergestellt. Die Mischung kann in Faser- oder Garnform vorliegen. Nach der Herstellung der Textillage wird die wasserlösliche Faserkomponente in einer geringfügig sauren, wässrigen Lösung ausgewaschen, welche einen pH Wert zwischen 4 und 5 hat. Dieser Waschvorgang kann ca. 30 Minuten dauern. Anschließend wird ein Spülvorgang von ca. 10 Minuten bei 40°C durchgeführt. Die Kuralon K-II Faser wird vollständig und rückstandsfrei aufgelöst. Nach diesem Produktionsschritt wird die Textillage am Spannrahmen gespannt und getrocknet.

Das Auswaschen der lösbaren Polyvinylalkoholfasern in einer Mischung aus schwerentflammbaren Fasern kann alternativ auch gleichzeitig während eines anschließenden, für die Fasermaterialien geeigneten Färbeverfahrens erfolgen.

Zum Beispiel können Viskose FR Fasern in einer Mischung aus Aramid, Viskose FR und Polyvinylalkohol mittels Jigger (Jet Färbeapparat, oder KKV Kaltklotzverfahren) wie folgt in der Farbe schwarz gefärbt werden:

### Jiggerfärbung:

20 min. Vorwäsche bei 80°C mit 1g/l Kiralon Jet, 1g/l Natriumkarbonat. Anschließend wird warm und kalt gespült.
Färbung mit einem Flottenverhältnis von 1:20
Levafix dunkelblau E-BNA 4%, Levafix rot E-BA 2%
80g/l Natriumsulfat, 10g/l Natriumcarbonat, 3g/l Natriumbikarbonat, 1g/l Albegal FFA, 1g/l Persoftal L
Die folgende Färbekurve beschreibt den Ablauf des Färbeprozesses in Bezug auf Zeit (min), Temperatur (°C) und Chemikalien-Einsatz.

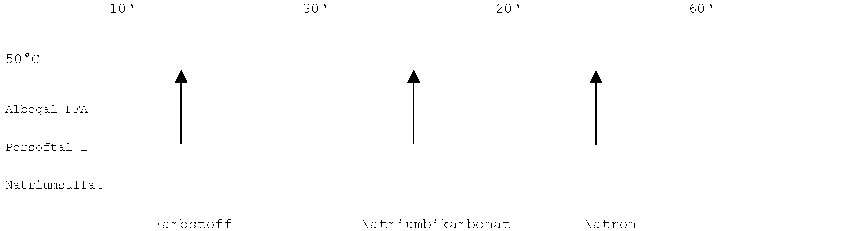

Im Anschluss an die Färbung wird das textile Material kalt gespült, mit 1ml/l Essigsäure abgesäuert (10min bei 40°C). Die Verseifung erfolgt mit 1g/l Kieralon JET bei 90°C und 20min. Der Färbeprozess wird mit einem weiteren warmen und kalten Spülvorgang abgeschlossen.

Während dieses Färbeprozesses wird neben der Anfärbung der schwerentflammbaren Viskose FR Faser gleichzeitig die Polyvinylalkoholfaser restlos entfernt.

Es liegt auf der Hand, dass dieses Verfahren eine sehr effiziente textile Herstellungsmethode darstellt. Durch den Polyvinylfaseranteil werden zusätzlich Materialkosten im Vergleich zu reinen schwerentflammbaren Fasermischungen gespart.

Je nach Verwendungszweck bzw. weiterer Verarbeitung kann die Textillage noch weiter zum Beispiel mit einer leichten Kunstharzausrüstung zur Stabilisierung und Knitterverminderung (z.B. 70g/l Knittex FÜR konz. 15g/l Magnesiumchlorid, 0,5g/l Natriumfluorborat, 60g/l Ultratex 7359, 30g/l Turpex VU, 3g/l Katalysator VUK), oder mit einer Öl und Wasser abweisenden Ausrüstung veredelt werden.

### Verfahren 3 (Kombination von Ätzdruckverfahren und Verfahren 2)

Bei diesem Verfahren wird eine Textillage hergestellt, die aus mindestens drei Faserkomponenten, nämlich
- wasserlöslichen PVA-Fasern
- schwerentflammbaren Zellulosefasern und
- schwerentflammbaren synthetischen Fasern
besteht. Eine Mischung aus diesen drei Faserkomponenten wird entsprechend dem textilen Herstellungsprozess entweder in Faserform als Nonwovens, oder in einem Garn zu einer Textillage verarbeitet. Auf die Textillage wird eine Ätzpaste, wie im Verfahren 1 beschrieben, mustermäßig aufgedruckt. Im Anschluss wird die Textillage bei 80°C getrocknet und die Ätzpaste im Spannrahmen thermisch bei 200°C und 40 Sekunden Verweilzeit aktiviert.

Im darauf folgenden Auswaschprozess bei 80-95°C und 30 Minuten wird der geätzte Zellulosefaseranteil und die Polyvinylalkoholfaser gleichzeitig in einem Prozessschritt auf einer Mehrkammer-Breitwaschanlage ausgewaschen und entfernt. Nach diesem Produktionsschritt wird die textile Fläche am Spannrahmen gespannt und getrocknet.

Je nach Verwendungszweck bzw. weiterer Verarbeitung kann die textile Fläche optional noch weiter veredelt werden, zum Beispiel mit einer Kunstharzausrüstung zur Stabilisierung, oder mit einer Öl und Wasser abweisenden Ausrüstung.

Zu der beschriebenen 3er Mischung kann zur Verbesserung der Abrasionsbeständigkeit auch ein geringer Anteil, vorzugsweise 5%-20%, von Standard-Synthetikfasern als 4. Komponente beigemengt werden, zum Beispiel Polyamidfasern.

Das Resultat ist ein neuartiger, extrem leichter Stoff, bestehend aus sehr feinen Garnen in einer Zweier-Mischung aus schwerentflammbaren Zellulose- und synthetischen Fasern (PVA-Fasern wurden vollständig entfernt) in Kombination mit Musteranalogen Stellen im Stoff, die nur aus synthetischen Fasern bestehen. Aus einer 3-Faserkomponenten-Textillage wurde eine dreidimensionale Textillage, bestehend aus nur noch zwei bzw. einer musteranalogen Faserkomponente geschaffen.

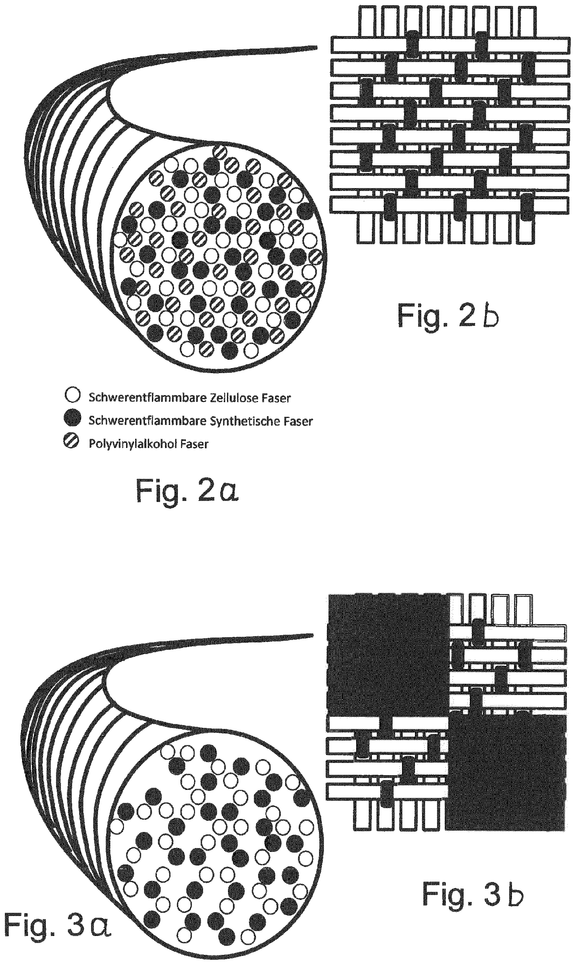

In den Figuren 2a, 2b, 3a, 3b ist dieser Sachverhalt anschaulich dargestellt.

Figur 2a zeigt ein Garn im unbehandelten Ausgangszustand, das aus wasserlöslichen PVA-Fasern, schwerentflammbaren Zellulosefasern und schwerentflammbaren synthetischen Fasern besteht. Figur 2b zeigt eine Textillage von oben im unbehandelten Ausgangszustand.

Figur 3a zeigt das Garn von Figur 2a, nachdem die wasserlöslichen PVA-Fasern gemäß dem Verfahren 3 herausgewaschen wurden. Figur 3b zeigt die Textillage von Figur 2b, nachdem die Textillage vollständig gemäß dem Verfahren 3 behandelt wurde, d.h. nachdem die Textillage nicht nur von den PVA-Fasern befreit, sondern auch noch zusätzlich mit dem Ätzdruckverfahren behandelt wurde. Die schwarzen quadratischen Bereiche entsprechen den geätzten Stelle. Durch das zusätzliche Herauslösen der schwerentflammbaren Zellulosefasern werden (zusätzliche) Luftkammern geschaffen, die gewichtsreduzierend, zusätzlich isolierend und atmungsfördernd sind.

### Schutzbekleidung

Schwerentflammbare Schutzbekleidung weist vorzugsweise mehrere Textillagen auf. Die mittels des erfindungsgemäßen Verfahrens hergestellte Textillage kann vorzugsweise als innerste Lage (Futterstoff) des Textilmaterials bzw. der Schutzbekleidung verwendet werden. Es können auch mehrere Lagen gemeinsam verarbeitet werden. Zum Beispiel als Laminatsträger, Isolationslage und als Futterstoff, welcher mit der Isolationslage zu einem Steppfutter versteppt ist. Die Schutzbekleidung der Erfindung kann auch aus einem 3-Lagen-Laminat bestehen, wobei jede, eine oder zwei Lagen aus einer Textillage besteht (bestehen), die mittels des erfindungsgemäßen Verfahrens, insbesondere mit einem der vorstehend beschriebenen Verfahren 1-3, hergestellt wurde. Des Weiteren besteht die Möglichkeit, die erfindungsgemäßen Textillagen als Träger für Direktbeschichtungen aller Art zu verwenden.

Die schwerentflammbare Schutzbekleidung der Erfindung kann alle Arten von Schutzbekleidung umfassen:
Jacken, Mäntel, Hosen, Shirts, Polos, Pullover, Westen, Sweatshirts, T-Shirts, Socken, Schürzen, Handschuhe, Kopfschutzhauben und Kopfschutzartikel und jegliche andere Bekleidungsstücke, welche zum Schutz vor Hitze, Flammen, Störlichtbögen und ähnliche Risiken getragen werden und mehrlagig konstruiert sind.

### Beispiel 1:

Eine Feuerwehrschutzbekleidung bestehend aus Einsatzjacke und Einsatzhose wurde aus folgendem Materialaufbau hergestellt:
A. Außenlage
B. Nässesperre neu
C. Steppfutter neu

### A. Außenlage:

Die Außenlage bestand aus 100% Aramid (Nomex Tough) 75/23/2 Nomex/Kevlar/P140 Anti-Statikfaser; 195 g/m² Bindung Köper 2/1 Z Grat; Farbe Dunkelblau.

### B. Nässesperre-Laminat:

Ein Wasserstrahl-verfestigtes Non-Wovens, bestehend aus 50% Aramid-Faser und 50% Viscose FR mit einem Gewicht von 80g/m² und einer Dicke von 0,83 mm wurde analog Verfahren 1 mit einer Ätzpaste und einem All-overmuster, bestehend aus runden Kreisen mit einem Durchmesser von 0,7 cm und einen jeweiligen Abstand von 0,5 mm zueinander, mittels Rotationsdruck bedruckt. Das bedruckte Wasserstrahlvlies wurde anschließend bei 80°C getrocknet und bei 190°C für 40sec. wärmebehandelt. Im Anschluss wurde der zerstörte Viscose FR Anteil ausgewaschen. Das Ergebnis war ein 60g/m² leichtes Wasserstrahlvlies aus 50/50 Aramid/Viscose FR mit Punkten, die nur aus 100% Aramid Faser bestehen. Durch das Herauslösen der Viskosefasern wurde nicht nur das Gewicht reduziert, sondern auch eine höhere Isolation in das Vlies eingebracht, da die verbleibenden Aramid Fasern das Volumen beibehalten und anstelle der Viskose FR Luft in das Textil eingeschlossen wird. Diese neue Textillage wurde im Anschluss mittels Hotmelt-Lamination mit einer PU Membrane laminiert. Kleber und Membrane hatten gemeinsam ca. 40g/m² sodass letztendlich ein Laminatgesamtgewicht von 100g/m² hergestellt wurde.

### C. Steppfutter

Ein Steppfutter wurde aus dem neuen Wasserstrahlvlies, welches unter B beschrieben wurde, in Kombination mit einem neuen Abdeckgewebe hergestellt. Das neue Abdeckgewebe war ein leichtes Futtergewebe aus
- 40% Aramid 1,4 dtex/51mm Stapellänge(Nomex) spinndüsengefärbt dunkelblau
- 40% Viscose FR 2,2 dtex/51mm Stapellänge(Lenzing FR) rohweiss
- 20% Polyvinylalkohol 2,2 dtex/51mm Stapellänge (Kuralon K-II)Faser rohweiss.

Die Fasern wurden vor dem Spinnen in einer Mischanlage intim gemischt und konventionell mit einem Dreizylinder-Spinnverfahren zu einem Nm 65/2 Garn ausgesponnen. Dieses Garn wurde anschließend mit 23 Fäden/cm in der Kette und 23 Fäden/cm im Schuss zu einem 135 g/m² Stoff verwoben. Die Farbe des Stoffes (Textilmaterials) war durch die Fasermischung melange blau.

Dieser Stoff wurde im Anschluss mittels **Verfahren 3** wie folgt behandelt. Aufdrucken einer Ätzpaste analog eines Allover Musters mittels Rotationsdruck. Das Muster bestand aus einem Schachbrettkaro. Im Anschluss wurde das Textilmaterial bei 80°C getrocknet und bei 190°C 40sec. wärmebehandelt. Im Anschluss wurde in einem ca. 20 minütigen Waschprozess mit einer Waschflotte mit pH Wert zwischen 4 und 5 gewaschen und im anschließenden Spülvorgang von ca. 10 Minuten bei 40°C gespült. Nach diesem Produktionsschritt wurde das Textilmaterial am Spannrahmen gespannt und getrocknet. Das Ergebnis war ein Textilmaterial mit einem Endgewicht von 90g/m² bestehend aus einer sehr leichten Fläche aus 50/50 Aramid/Viscose FR in melange blau und dunkelblauen Quadraten aus 100% Aramid Faser. Durch die Anwendung von Verfahren 3 wurde ein neuartiger Stoff hergestellt, der sich nicht nur gewichtstechnisch und performancemäßig, sondern auch optisch von der Ausgangsware unterscheidet. Auf die Figuren 2a-3b wird verwiesen.

Dieser neue Stoff wurde nun mit dem neuen Wasserstrahlvlies, deren Herstellung in B beschrieben wurde, mit einem roten Steppfaden aus 100% PES rautenförmig versteppt.

Das Resultat war ein extrem leichtes Steppfutter mit einem Gesamtgewicht von ca. 150g/m².

Die Komponenten A, B, C, wurden zu einem Feuerwehraufbau zusammengestellt. Dieser neue Aufbau wurde im Vergleich mit dem originalen Aufbau nach den Anforderungen der EN 469 Feuerwehrschutzbekleidungsnorm sowie anhand von weiteren wichtigen Parametern, welche in Folge beschrieben werden, geprüft. Die Proben wurden nach EN 6330 5x60°C + Tumbler Trocknung bei normaler Temperatur vorbehandelt.

Die Ergebnisse zeigen, dass der neue Aufbau, obwohl er um 85g/m² leichter ist, gleichwertige Schutzwirkung bei verbesserter physiologischer Leistungsfähigkeit bietet. Für die Schutzbekleidung in Form eines Anzugs wurden ca. 5 Laufmeter Stoff benötigt, das ergab eine signifikante Gewichtsersparnis auf den kompletten Anzug von ca. 637g! Des Weiteren zeigte sich, dass das Textilmaterial der Erfindung weniger Feuchtigkeit aufnimmt und auch schneller trocknet. Als Testverfahren für die Wasseraufnahme Kapazität von Textilien wurde der GATS Test (Gravimetric absorbency testing system) verwendet.

Feuchtigkeit hat einen signifikanten Einfluss auf das Schutzniveau von persönlicher Schutzbekleidung. Eine Anzahl von unabhängigen Studien bestätigen, dass Schutzbekleidung mit weniger Feuchtigkeit im System bessere Schutzwirkung bietet, speziell wenn der Träger über einen längeren Zeitraum geringer Strahlungshitze ausgesetzt ist. Eine geringere Feuchtigkeitsaufnahme hat auch Vorteile in Bezug auf die Pflegeeigenschaften von Schutzbekleidung, insbesondere auf das Trocknungsverhalten nach industrieller Wäsche. Feuerwehrschutzbekleidung, die schneller trocknet, kann nach einem Einsatz früher wieder in den Dienst gestellt werden und bringt somit wesentliche Zusatzvorteile für den Feuerwehrmann. Auf Tabelle 2 wird verwiesen.

**Tabelle 2**

| | Gesamtgewicht g/m² | Hitzedurchgang Flamme [sec] | Hitzedurchgang Strahlung [sec] | Wasserdampfdurc hgangswiderstand RET [m²Pa/W] | GATS test [g/g] nach 20 sec. | Trocknungszeit [mg] nach 20 min. |
|---|---|---|---|---|---|---|
| Neuer Aufbau Outershell 195gsm Laminat neu 100gsm Steppfutter neu 150gsm | 445 | 16,2 | 18,5 | 14,0 | 2,1 | 210 |
| Aufbau mit original Gewebe Outershell 195gsm Laminat 120gsm Steppfutter 215gsm | 530 | 16,1 | 18,7 | 20,7 | 2,0 | 425 |

### Flammschutz:

Sowohl das Laminat B als auch das Steppfutter C wurde nach EN ISO 15025 Verfahren A Flächenbeflammung getestet und konnten nicht entzündet werden.

Bei der Flächenbeflammung des Stoffes verkohlte das Gewebe zwar, aber es behielt die Struktur, zeigte keine Lochbildung und funktionierte weiter als intakte Barriere gegen Flammen.

Nachbrennzeit und Nachglimmen des Stoffes wurden nach EN ISO 15025 Verfahren A getestet. Der Stoff zeigte in Kettrichtung 0 Sekunden und in Schussrichtung 0 Sekunden Nachbrennzeit. (Erlaubt sind in der Norm 2 Sekunden).

Zusammenfassend kann man sagen, dass die neue schwerentflammbare Schutzbekleidung der Erfindung nicht nur gleichwertigen Schutz vor Hitze und Flammen bietet, sondern vor allem das Gewicht der Schutzbekleidung und folglich auch den physiologischen Einfluss auf den Träger stark reduziert. Die Atmungsaktivität wird maximiert und somit das Risiko auf tödlichen Hitzestress vermindert.

### Beispiel 2:

Eine schwerentflammbare Schutzbekleidung zum Schutz vor elektrischen Störlichtbögen wurde aus folgendem 3-Lagen-Laminat hergestellt:
A. Neue Außenlage
B. Atmungsaktive Membrane
C. Neue gestrickte Abseite

### A. Neue Außenlage:

Ein Gewebe wurde aus
- 25% Aramid 1,4 dtex/51mm Stapellänge(Nomex) spinndüsengefärbt dunkelblau
- 55% Viscose FR 2,2 dtex/51mm Stapellänge(Lenzing FR) rohweiss
- 20% Polyvinylalkohol 2,2 dtex/51mm Stapellänge (Kuralon K-II)Faser rohweiss
hergestellt.

Die Fasern wurden vor dem Spinnen in einer Mischanlage intim gemischt und konventionell mit einem Dreizylinder-Spinnverfahren zu einem Nm 42/2 Garn ausgesponnen. Dieses Garn wurde anschließend mit 25 Fäden/cm in der Kette und 25 Fäden/cm im Schuss zu einem 250 g/m² Stoff verwoben. Die Farbe des Stoffes war durch die Fasermischung melange blau.

Dieser Stoff wurde im Anschluss mittels **Verfahren 2** in einem 30 minütigen Waschprozess mit einer Waschflotte mit pH Wert zwischen 4 und 5 gewaschen und im anschließenden Spülvorgang von ca. 10 Minuten bei 40°C gespült, verseift und gespült. Die Polyvinylalkohol-Fasern wurden restlos entfernt. Nach diesem Produktionsschritt wurde das Gewebe am Spannrahmen gespannt und getrocknet. Das Ergebnis war ein Textilmaterial mit einem Endgewicht von 200g/m², bestehend aus einer sehr leichten Fläche aus 35/65 Aramid/Viscose FR in melange blau. Durch die Anwendung von Verfahren 2 wurde ein neuartiger Stoff hergestellt, der sich nicht nur gewichtstechnisch, sondern auch performancemäßig und optisch (etwas dunklere melange blaue Farbe) von der Ausgangsware unterscheidet.

### C. Neue gestrickte Abseite:

Ein Single Jersey Gestricke mit 70g/m² wurde auf einer Rundstrickmaschine mit einer Feinheit von E24 aus folgendem Garn hergestellt:
Dreizylinder Garn: einfaches Garn in Nm 50/1 bestehend aus:
50% Aramid Fasern 1,7dtex 51mm Stapellänge dunkelblau
50% Polyvinylalkohol Fasern 2,2dtex 51mm Stapellänge.

Das Garn hatte eine melangefarbene Optik.

Anschließend wurde der Polyvinylalkohol-Faseranteil nach **Verfahren 2** zur Gänze aus dem Gestricke entfernt. Das Gestricke wurde mit einem 20 minütigen Waschprozess mit einer Waschflotte mit pH-Wert zwischen 4 und 5 gewaschen und im anschließenden Spülvorgang von ca. 7 Minuten bei 40°C gespült, verseift und gespült. Nach diesem Produktionsschritt wurde das Gestricke auf einem Bandtrockner, welcher vor allem für sehr leichte Gestricke geeignet ist, getrocknet, die Kanten verleimt und auf eine Kaule aufgewickelt. Das Ergebnis war eine dunkelblaue Textillage mit einem Endgewicht von nur 35 g/m², bestehend aus 100% Aramid Fasern. Durch die Anwendung von Verfahren 2 wurde ein neuartiger Stoff hergestellt, der sich nicht nur gewichtstechnisch, sondern auch und vor allem in der Offenheit und Feinheit als auch farblich und optisch signifikant von der Ausgangsware unterscheidet. Überraschend war auch, dass durch das Herauslösen der Polyvinylalkoholfaser die Warenbreite um rund 20cm breiter wurde!

Die neuen textilen Flächen A und C wurden im Anschluss mittels Hotmelt-Lamination mit einer PTFE-Bikomponenten-Membrane laminiert. Kleber und Membrane hatten gemeinsam ca. 45g/m², so dass letztendlich ein Laminatgesamtgewicht von 280g/m² hergestellt wurde.

Ein derartiges 3-Lagen-Laminat ist in Figur 4 dargestellt. Die neue Außenlage A ist dort mit dem Bezugszeichen 1, die Membrane B mit 6, der Kleber mit 7 und die neue gestrickte Abseite C mit 8 bezeichnet.

Dieses Laminat wurde gegen elektrischen Störlichtbogen nach EN ISO 61482 1-2 4kA und 7kA getestet. Das Laminat schaffte mit ausreichenden Werten die nötigen Anforderungen nach Stoll (Stollkurve) für 4kA und auch die Anforderungen für 7kA.

Normale Aufbauten bewegen sich in Gewichtsklassen von ca. 400-500g/m², um die Klasse 2 nach EN ISO 61482 1-2 zu erreichen. Die Stollkurve ist eine Kurve aus thermischer Energie und Zeit, welche sich aus der Berechnung der vorhergesagten, möglichen Verbrennungen 2. Grades der menschlichen Haut ergibt.

### Atmungsaktiviät, Komfort und Thermophysiologische Testergebnisse:

Das Laminat der Erfindung wurde auf Atmungsaktivität, Komfort und thermophysiologische Eigenschaften getestet.

Das Ergebnis zeigte einen sehr niedrigen Wasserdampfdurchgangswiderstand. Besonders hervorzuheben war die außergewöhnlich gute Verschweißbarkeit der Nähte mit einem 3-Lagen Nahtabdichtungsband. Selbst nach 25 Industriewäschen nach ISO 15797 60°C und Tumbler waren die Nähte bei 60.000 Pa dicht. Diese exzellente Verschweißbarkeit ist auf die sehr offene Struktur des neuen Gestrickes zurück zu führen.

Ein weiterer wesentlicher Vorteil der neuen Schutzbekleidung aus dem hergestellten Laminat ist die Kostenreduktion, da Polyvinylalkohol-Fasern signifikant günstiger sind als Aramide oder Viscose FR und in einem Garn diese teuren Fasern durch wesentliche Anteile Polyvinylalkohol-Fasern ersetzt wurden. Der zusätzliche Waschprozess zum Herauslösen der Fasern stellt zwar einen weiteren Kostenpunkt dar, jedoch ist bei der Herstellung der Textilien ohnehin eine Naßbehandlung nötig, um den Waschschrumpf (hauptsächlich hervorgerufen durch die Viscose FR Faser) zu stabilisieren und das Textil zu relaxieren. Da keine schmelzenden Fasern in der genannten Mischung verwendet wurden, ist eine thermische Fixierung wie bei PES Stoffen nicht möglich.

Zusammenfassend kann man sagen, dass die neue schwerentflammbare Schutzbekleidung der Erfindung bestehend aus dem neuen 3-Lagen-Laminat nicht nur hervorragenden Schutz vor elektrischen Störlichtbögen bietet, sondern vor allem auch sehr leicht und atmungsaktiv ist. Der Griff des Laminates ist außergewöhnlich weich und angenehm im Vergleich zu herkömmlichen 3-Lagen-Laminaten basierend auf 100% Aramid Fasern und Bikomponenten-PTFE-Membranen. Vor allem durch die neue Abseite erreicht man eine hervorragende Verschweißung und Dichtigkeit von Nähten.

### Beispiel 3

Eine schwerentflammbare Schutzbekleidung in Form einer zweilagigen Kopfschutzhaube für Feuerwehranwendungen wurde folgendermaßen hergestellt:
Ein Interlock-Gestricke mit 190 g/m² wurde auf einer Rundstrickmaschine mit einer Feinheit von E24 aus folgendem Garn hergestellt:
Dreizylinder Garn: einfaches Garn in Nm 50/1 bestehend aus:
- 40% Aramid-Fasern 1,7dtex 51mm Stapellänge, dunkelblau
- 40% Viscose FR Fasern 2,2dtex 51mm Stapellänge, rohweiß
- 20% Polyvinylalkohol-Fasern 2,2dtex 51mm Stapellänge, rohweiß

Das resultierende Gestricke hatte eine melangefarbene Optik.

Dieser Stoff wurde anschließend mittels **Verfahren 3** wie folgt behandelt. Aufdrucken einer Ätzpaste analog eines Allover Musters mittels Rotationsdruck. Das Muster bestand aus einem 2cm breiten Schachbrett-Karo. Im Anschluss wurde die textile Fläche bei 80°C getrocknet und bei 190°C 40sec. wärmebehandelt. Danach wurde in einem ca. 20 minütigen Waschprozess mit einer Waschflotte mit pH-Wert zwischen 4 und 5 gewaschen und im anschließenden Spülvorgang von ca. 10 Minuten bei 40°C gespült, geseift und gespült. Nach diesem Produktionsschritt wurde das Textilmaterial am Spannrahmen gespannt und getrocknet. Das Ergebnis war ein Textilmaterial mit einem Endgewicht von 114 g/m², bestehend aus einer sehr leichten, erhabenen Fläche aus 50/50 Aramid/Viscose FR in melange blau und dunkelblauen Quadraten aus 100% Aramid Faser.

Durch die Anwendung von Verfahren 3 wurde ein neuartiges schwerentflammbares Gestricke hergestellt, das sich nicht nur gewichtstechnisch und performancemäßig, sondern vor allem optisch von der Ausgangsware unterscheidet.

Dieses neuartige Gestricke wurde im Anschluss doppellagig zu einer Kopfschutzhaube verarbeitet und nach EN ISO 13911 Kopfschutzhauben für Feuerwehr geprüft.

Der Verbund hat trotz des geringen Gewichtes die Anforderungen der Norm mit sehr guten Ergebnissen bestanden.

Die neuen Gestricke haben in Doppellage eine um ein Vielfaches höhere Luftdurchlässigkeit bei geringerem Gewicht als das unbehandelte Originalgestricke.

Umso höher die Luftdurchlässigkeit, umso geringer ist das Risiko auf Hitze Stress und Hitzeschlag. Zusätzlich sind die Trocknungseigenschaften des Gestrickes nach der Wäsche in höchstem Maß von der Luftdurchlässigkeit beeinflusst. (EN ISO 9237)

### Alambeta - Wärmeleitfähigkeit:

Das Gestricke der Erfindung wurde auf seine Komfort Eigenschaften überprüft.

Die Alambeta-Testmethode misst die Transmission der Körperwärme durch einen Stoff. Der Prüfling wird zwischen zwei Platten positioniert. Eine der beiden Platten hat Umgebungstemperatur und die andere wird auf 35°C aufgeheizt, um die Hauttemperatur zu simulieren. Ein Temperaturgradient wird hergestellt, wenn der obere warme Zylinder plötzlich auf die Stoffprobe gesenkt wird. Textilien mit einem hohen Hitzeeindringungskoeffizienten fühlen sich kühler an und machen in Folge Stoffe angenehmer zu tragen, besonders unter heißen, klimatischen Bedingungen. Das Gestricke der Erfindung zeigt den höchsten Hitzeeindringungskoeffizienten und fühlt sich daher kühler an. Die Anforderungen der Schutzwirkung getestet nach EN ISO 13911 gegenüber Strahlungshitze mit 20kW ist jedoch absolut gewährleistet.

Auf Tabelle 3 wird verwiesen.

### Wasserdampfdurchgangswiderstand RET:

Mittels des Hautmodells kann man den Hitze- und Feuchtigkeitstransport durch ein Gewebe messen. Es besteht aus einer mikroporösen Platte, welche die menschliche Haut simuliert und Wasserdampf absondern kann. Der Apparat ist in einer Klimakammer mit konstanten klimatischen Verhältnissen und einem spezifizierten Luftstrom, welcher über die Messprobe geleitet wird, eingebaut.

Der Wasserdampfdurchgangswiderstand (RET) ist ein Messwert, der den Widerstand des Wasserdampfes durch ein Textilmaterial angibt. Je geringer der RET, umso geringer der Widerstand, umso höher ist der Wasserdampftransfer durch das Textilmaterial. Der Wert wird nach ISO 11092 mit dem Hautmodell gemessen. Der RET wird oft auch als Atmungsaktivität von Stoffen bezeichnet.

Das Gestricke der Erfindung zeigt im doppellagigen Aufbau den geringsten RET, den höchsten Wasserdampftransfer durch den Stoff und ist daher das bessere Material in Bezug auf Atmungsaktivität und Tragekomfort verglichen mit dem originalen unbehandelten Textil.

Auf Tabelle 3 wird verwiesen.

**Tabelle 3 - Gestricke Testergebnisse**

| | Hitzeeindringungskoeffizient Alambeta [wm²s1/2K -1] | Luftdurchlässigkeit [l/m²s] | Wasserdampfdurch gangswiderstand RET [m²Pa/W] |
|---|---|---|---|
| Doppellagiges Gestricke nach Behandlung | 155 | 1500 | 6,2 |
| Originales unbehandeltes, doppellagiges Gestricke | 128 | 430 | 10,5 |

## Patentansprüche

1. Verfahren zur Herstellung eines Laminates für Schutzbekleidung zum Schutz vor Hitze und Flammen, wobei das Laminat mindestens eine Textillage umfasst, die aus schwerentflammbaren Fasern aus synthetischen Polymeren und Zellulosefasern besteht, wobei die synthetischen Polymere aus der Gruppe von para-Aramid, meta-Aramid, aromatischen PES, PBI, Melaminharz, Novoloid, Modacryl, FR Polyamid, in Reinform oder einer Mischung davon ausgewählt sind, und wobei die Textillage einem Behandlungsschritt unterzogen wird, bei dem mindestens eine Faserkomponente zumindest teilweise aus der Textillage herausgelöst wird.

2. Verfahren nach Anspruch 1, **dadurch gekennzeichnet, dass** mindestens eine Faserkomponente mittels Ätzdruck aus der schwerentflammbaren Textillage herausgelöst wird.

3. Verfahren nach Anspruch 2, **dadurch gekennzeichnet, dass** auf die schwerentflammbare Textillage eine Ätzpaste aufgetragen wird, welche die Zellulosefasern ätzt, wenn die Ätzpaste bei Temperaturen über 150°C aktiviert wird.

4. Verfahren nach einem der Ansprüche 1 bis 3, **dadurch gekennzeichnet, dass** die schwerentflammbare Textillage eine wasserlösliche Faserkomponente umfasst, und dass die schwerentflammbare Textillage einem Behandlungsschritt unterzogen wird, bei dem die wasserlösliche Faserkomponente zumindest teilweise aus der schwerentflammbaren Textillage herausgewaschen wird.

5. Verfahren nach Anspruch 4, **dadurch gekennzeichnet, dass** die wasserlösliche Faserkomponente aus Polyvinylalkoholfasern besteht, und dass das Herauswaschen der Polyvinylalkoholfasern mittels einer geringfügig sauren, wässrigen Lösung durchgeführt wird, die einen pH-Wert zwischen 4 und 5 hat.

6. Verfahren nach Anspruch 1, **dadurch gekennzeichnet, dass** die schwerentflammbare Textillage sowohl eine erste Faserkomponente, welche mittels einer Ätzpaste aus der schwerentflammbaren Textillage herauslösbar ist, als auch eine zweite wasserlösliche Wasserkomponente umfasst, die mittels einer wässrigen Lösung aus der schwerentflammbaren Textillage herauswaschbar ist, wobei sowohl die erste Faserkomponente durch Ätzdruckbehandlung als auch die zweite, wasserlösliche Faserkomponente durch Auswaschbehandlung aus der Textillage herausgelöst werden.

7. Verfahren nach Anspruch 6, **dadurch gekennzeichnet, dass** das Herauslösen der mit der Ätzpaste behandelten ersten Faserkomponente und der zweiten wasserlöslichen Faserkomponente gleichzeitig in einem Auswaschschritt erfolgt.

8. Verfahren nach Anspruch 6, **dadurch gekennzeichnet, dass** das Herauslösen der mit der Ätzpaste behandelten ersten Faserkomponente und der zweiten, wasserlöslichen Faserkomponente gleichzeitig während eines Färbeprozesses erfolgt.

9. Schwerentflammbares Textilmaterial für eine Schutzbekleidung zum Schutz vor Hitze und Flammen, hergestellt nach einem Verfahren gemäß einem der Ansprüche 1 bis 8.

10. Schwerentflammbares Textilmaterial nach Anspruch 9, **dadurch gekennzeichnet, dass** die Textillage aus mindestens 10 - 60 % Zellulosefasern, 10 - 60 % wasserlösliche Polyvinylalkoholfasern und 10 - 60 % Fasern aus der Gruppe der schwerentflammbaren Fasern aus synthetischen Polymeren besteht.

11. Schwerentflammbares Textilmaterial nach Anspruch 9 oder 10, **dadurch gekennzeichnet, dass** das Textilmaterial mehrere Textillagen umfasst, wobei bei mindestens einer Textillage eine Faserkomponente mittels Ätzdruck herausgelöst und bei mindestens einer anderen Textillage eine wasserlösliche Faserkomponente herausgewaschen ist.

12. Schwerentflammbare Schutzbekleidung zum Schutz vor Hitze und Flammen, zumindest überwiegend bestehend aus einem schwerentflammbaren Textilmaterial nach einem der Ansprüche 9 bis 11.

## Claims

1. Method for producing a laminate for protective clothing for protection against heat and flames, wherein the laminate comprises at least one textile layer that consists of flame-resistant fibres made of synthetic polymers and cellulose fibres, wherein the synthetic polymers are selected from the group consisting of para-aramid, meta-aramid, aromatic PES, PBI, melamine rein, novoloid, modacrylic and FR polyamide, either in pure form or in a mixture thereof, and wherein the textile layer is subjected to a treatment step in which at least one fibre component is extracted from the textile layer at least in part.

2. Method according to claim 1, **characterised in that** at least one fibre component is extracted from the flame-resistant textile layer by means of discharge printing.

3. Method according to claim 2, **characterised in that** a discharge paste is applied to the flame-resistant textile layer, which discharges the cellulose fibres when the discharge paste is activated at temperatures above 150 °C.

4. Method according to any of claims 1 to 3, **characterised in that** the flame-resistant textile layer comprises a water-soluble fibre component, and **in that** the flame-resistant textile layer is subjected to a treatment step in which the water-soluble fibre component is washed out of the flame-resistant textile layer at least in part.

5. Method according to claim 4, **characterised in that** the water-soluble fibre component consists of polyvinyl alcohol fibres, and **in that** the polyvinyl alcohol fibres are washed out by means of a slightly acidic aqueous solution having a pH of between 4 and 5.

6. Method according to claim 1, **characterised in that** the flame-resistant textile layer comprises both a first fibre component, which can be extracted from the flame-resistant textile layer by means of a discharge paste, and a second water-soluble water component, which can be washed out of the flame-resistant textile layer by means of an aqueous solution, the first fibre component being extracted from the textile layer by means of a discharge printing treatment and the second water-soluble fibre component being extracted from said textile layer by means of a washing-out treatment.

7. Method according to claim 6, **characterised in that** the first fibre component treated with the discharge paste and the second water-soluble fibre component are extracted at the same time in a washing-out step.

8. Method according to claim 6, **characterised in that** the first fibre component treated with the discharge paste and the second water-soluble fibre component are extracted at the same time during a dyeing process.

9. Flame-resistant textile material for protective clothing for protection against heat and flames, which is produced in accordance with a method according to any of claims 1 to 8.

10. Flame-resistant textile material according to claim 9, **characterised in that** at least 10-60 % of the textile layer consists of cellulose fibres, 10-60 % consists of water-soluble polyvinyl alcohol fibres and 10-60 % consists of fibres from the group consisting of flame-resistant fibres made of synthetic polymers.

11. Flame-resistant textile material according to either claim 9 or claim 10, **characterised in that** the textile material comprises a plurality of textile layers, a fibre component being extracted from at least one textile layer by means of discharge printing, and a water-soluble fibre component being washed out of at least one other textile layer.

12. Flame-resistant protective clothing for protection against heat and flames, at least predominantly made of a flame-resistant textile material according to any of claims 9 to 11.

## Revendications

1. Procédé pour réaliser un stratifié pour vêtements de protection destinés à la protection contre la chaleur et les flammes,
le stratifié comprenant au moins une couche textile qui est constituée de fibres difficilement inflammables en polymères synthétiques et en fibres de cellulose, les polymères synthétiques étant choisis parmi le groupe comprenant para-aramide, méta-aramide, PES aromatiques, PBI, résine de mélamine, novoloïde, modacryle, polyamide FR, en forme pure ou un mélange de ceux-ci, et la couche textile étant soumise à une étape de traitement dans laquelle au moins une composante fibreuse est extraite au moins partiellement hors de la couche textile.

2. Procédé selon la revendication 1,
**caractérisé en ce que**
au moins une composante fibreuse est extraite hors de la couche textile difficilement inflammable par attaque chimique sous pression.

3. Procédé selon la revendication 2,
**caractérisé en ce que**
une pâte d'attaque chimique est appliquée sur la couche textile difficilement inflammable, pâte qui attaque les fibres de cellulose lorsque la pâte d'attaque chimique est activée à des températures supérieures à 150 °C.

4. Procédé selon l'une des revendications 1 à 3,
**caractérisé en ce que**
la couche textile difficilement inflammable inclut une composante fibreuse soluble à l'eau, et **en ce que**
la couche textile difficilement inflammable est soumise à une étape de traitement dans laquelle la composante fibreuse soluble à l'eau est extraite par lavage au moins partiellement hors de la couche textile difficilement inflammable.

5. Procédé selon la revendication 4,
**caractérisé en ce que**
la composante fibreuse soluble à l'eau est constituée de fibres d'alcool polyvinylique, et **en ce que**
l'extraction par lavage des fibres d'alcool polyvinylique est effectuée au moyen d'une solution aqueuse légèrement acide qui présente un pH entre 4 et 5.

6. Procédé selon la revendication 1,
**caractérisé en ce que**
la couche textile difficilement inflammable inclut aussi bien une première composante fibreuse qui peut être extraite hors de la couche textile difficilement inflammable au moyen d'une pâte d'attaque chimique, qu'une seconde composante aqueuse soluble à l'eau qui peut être extraite par lavage hors de la couche textile difficilement inflammable au moyen d'une solution aqueuse, et aussi bien la première composante fibreuse est extraite hors de la couche textile par traitement par d'attaque chimique sous pression que la seconde composante fibreuse soluble à l'eau est extraite hors de ladite couche textile par le traitement par lavage.

7. Procédé selon la revendication 6,
**caractérisé en ce que**
l'extraction de la première composante fibreuse traitée à la pâte d'attaque chimique et de la seconde composante fibreuse aqueuse s'effectue simultanément dans une étape d'extraction par lavage.

8. Procédé selon la revendication 6,
**caractérisé en ce que**
l'extraction de la première composante fibreuse traitée à la pâte d'attaque chimique et de la seconde composante fibreuse aqueuse s'effectue simultanément pendant un processus de coloration.

9. Matériau textile difficilement inflammable pour vêtements de protection destinés à la protection contre la chaleur et les flammes, réalisé par un procédé selon l'une des revendications 1 à 8.

10. Matériau textile difficilement inflammable selon la revendication 9, **caractérisé en ce que**
la couche textile est constituée d'au moins 10 à 60 % de fibres de cellulose, de 10 à 60 % de fibres d'alcool polyvinylique solubles à l'eau et de 10 à 60 % de fibres du groupe des fibres difficilement inflammables en polymères synthétiques.

11. Matériau textile difficilement inflammable selon la revendication 9 ou 10, **caractérisé en ce que**
le matériau textile comprend plusieurs couches textiles, et
dans au moins une couche textile, une composante fibreuse est extraite par attaque chimique sous pression, et
dans au moins une autre couche textile, une composante fibreuse soluble à l'eau est extraite par lavage.

12. Vêtement de protection difficilement inflammable destiné à la protection contre la chaleur et les flammes, constitué au moins majoritairement en un matériau textile difficilement inflammable selon l'une des revendications 9 à 11.
